(19) Europäisches Patentamt
European Patent Office
Office européen des brevets

(11) **EP 3 698 032 B1**

(12) **EUROPÄISCHE PATENTSCHRIFT**

(45) Veröffentlichungstag und Bekanntmachung des Hinweises auf die Patenterteilung:
**26.04.2023 Patentblatt 2023/17**

(21) Anmeldenummer: **18745567.0**

(22) Anmeldetag: **20.07.2018**

(51) Internationale Patentklassifikation (IPC):
**F02D 41/00** *(2006.01)* **F02D 41/14** *(2006.01)*
**F02D 41/40** *(2006.01)* **F02D 41/38** *(2006.01)*

(52) Gemeinsame Patentklassifikation (CPC):
**F02D 41/1406; F02D 21/08; F02D 41/0072;**
**F02D 41/40;** F02D 41/3836; F02D 41/401;
F02D 2041/1412; F02D 2041/1417;
F02D 2041/1433; Y02T 10/40

(86) Internationale Anmeldenummer:
**PCT/EP2018/069847**

(87) Internationale Veröffentlichungsnummer:
**WO 2019/076502 (25.04.2019 Gazette 2019/17)**

(54) **VERFAHREN ZUR MODELLBASIERTEN STEUERUNG UND REGELUNG EINER BRENNKRAFTMASCHINE**

METHOD FOR THE MODEL-BASED CONTROL AND REGULATION OF AN INTERNAL COMBUSTION ENGINE

PROCÉDÉ DE COMMANDE ET DE RÉGULATION D'UN MOTEUR À COMBUSTION INTERNE SUR LA BASE DE MODÈLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.10.2017 DE 102017009583**

(43) Veröffentlichungstag der Anmeldung:
**26.08.2020 Patentblatt 2020/35**

(73) Patentinhaber: **Rolls-Royce Solutions GmbH**
**88045 Friedrichshafen (DE)**

(72) Erfinder:
• BUCHHOLZ, Michael
89075 Ulm (DE)
• GRAICHEN, Knut
89079 Ulm (DE)
• HARDER, Karsten
89129 Langenau (DE)
• NIEMEYER, Jens
88045 Friedrichshafen (DE)

(74) Vertreter: **Kordel, Mattias et al**
**Gleiss Große Schrell und Partner mbB**
**Patentanwälte Rechtsanwälte**
**Leitzstrasse 45**
**70469 Stuttgart (DE)**

(56) Entgegenhaltungen:
**WO-A1-2017/102039      DE-A1-102009 016 509**

• SAMOKHIN SERGEY ET AL: "High-pressure recirculated exhaust gas fraction estimation and control in marine diesel engines", 2015 54TH IEEE CONFERENCE ON DECISION AND CONTROL (CDC), IEEE, 15. Dezember 2015 (2015-12-15), Seiten 1787-1792, XP032862375, DOI: 10.1109/CDC.2015.7402469 [gefunden am 2016-02-08]
• HARDER KARSTEN ET AL: "Nonlinear MPC with emission control for a real-world off-highway diesel engine", 2017 IEEE INTERNATIONAL CONFERENCE ON ADVANCED INTELLIGENT MECHATRONICS (AIM), IEEE, 3. Juli 2017 (2017-07-03), Seiten 1768-1773, XP033144574, DOI: 10.1109/AIM.2017.8014274 ISBN: 978-1-5090-5998-0 [gefunden am 2017-08-21]

- **HARDER KARSTEN ET AL: "A real-time nonlinear MPC scheme with emission constraints for heavy-duty diesel engines", 2017 AMERICAN CONTROL CONFERENCE (ACC), AACC, 24. Mai 2017 (2017-05-24), Seiten 240-245, XP033109918, DOI: 10.23919/ACC.2017.7962960 [gefunden am 2017-06-29]**

**Beschreibung**

Die Erfindung betrifft ein Verfahren zur Steuerung und Regelung einer Brennkraftmaschine mit Abgasrückführung, bei dem eine AGR-Rate mittels eines Kalman-Filters aus berechneten sowie gemessenen Größen des Gaspfads und aus berechneten sowie gemessenen Größen der Verbrennung bestimmt wird. Ferner betrifft die Erfindung ein Verfahren zur modellbasierten Steuerung und Regelung einer Brennkraftmaschine, bei dem in Abhängigkeit eines Soll-Moments über ein Verbrennungsmodell Einspritzsystem-Sollwerte zur Ansteuerung der Einspritzsystem-Stellglieder und über ein Gaspfadmodell Gaspfad-Sollwerte zur Ansteuerung der Gaspfad-Stellglieder in Abhängigkeit einer AGR-Rate berechnet werden.

Das Verhalten einer Brennkraftmaschine wird maßgeblich über ein Motorsteuergerät in Abhängigkeit eines Leistungswunsches bestimmt. Hierzu sind in der Software des heutigen Motorsteuergeräts entsprechende Kennlinien und Kennfelder appliziert. Über diese werden aus dem Leistungswunsch die Stellgrößen der Brennkraftmaschine berechnet, zum Beispiel der Spritzbeginn und ein erforderlicher Raildruck. Mit Daten bestückt werden diese Kennlinien/Kennfelder beim Hersteller der Brennkraftmaschine auf einem Prüfstand. Die Vielzahl dieser Kennlinien/Kennfelder und die Korrelation der Kennlinien/Kennfelder untereinander verursachen allerdings einen hohen Abstimmungsaufwand.

Eine bekannte Maßnahme zur Verringerung der Stickoxid-Emission ist die Abgasrückführung. Da die Abgasrückführungsrate, kurz: AGR-Rate, nicht unmittelbar messbar ist, muss diese aus anderen Messgrößen abgeleitet werden. So schlägt zum Beispiel die DE 10 2011 006 756 A1 zur Bestimmung der AGR-Rate eine Differenzdruckmessung in Abhängigkeit des Gasdrucks und des Atmosphärendrucks vor. Die DE 11 2010 003 780 T5 wiederum schlägt ein Schätzverfahren vor, bei dem der momentane Abgasmassenstrom durch die Abgasrückführungsleitung, basierend auf einem Druckdifferenz, der Kühlerauslasstemperatur des AGR-Kühlers und dem Einlasskrümmerdruck abgeschätzt wird. Bedingt durch die raue Umgebung für die Sensorik und der Toleranz des Stellglieds, sind beide bekannte Verfahren bezüglich der Genauigkeit noch verbesserungswürdig. Die Verwendung von Differenzdrucksensoren ist teuer. Hinsichtlich des Abstimmungsaufwands mittels Kennfeldern gilt das zuvor Gesagte. In der Praxis wird versucht den Abstimmungsaufwand durch die Verwendung von mathematischen Modellen zu reduzieren. So beschreibt zum Beispiel die DE 10 2006 004 516 B3 ein Bayesnetz mit Wahrscheinlichkeitstabellen zur Festlegung einer Einspritzmenge und die US 2011/0172897 A1 ein Verfahren zur Adaption des Spritzbeginns sowie der Spritzmenge über Verbrennungsmodelle mittels neuronaler Netze. Kritisch ist hierbei, dass lediglich trainierte Daten abgebildet werden, die erst bei einem Prüfstandslauf gelernt werden müssen.

Aus ""High-pressure recirculated exhaust gas fraction estimation and control in marine diesel engines" (SAMOKHIN SERGEY ET AL) ist ein Verfahren zur Schätzung der AGR-Rate mittels ein Unscented Kalman-Filters bekannt.

Aus "Nonlinear MPC with emission control for a real-world off-highway diesel engine" (HARDER KARSTEN ET AL) ist ein modellbasiertes Regelverfahren für eine Brennkraftmaschine bekannt.

Aus der US 2016/0025020 A1 ist ein modellbasiertes Regelverfahren für den Gaspfad einer Brennkraftmaschine bekannt. Der Gaspfad umfasst sowohl die Luftseite als auch die Abgasseite nebst einer Abgasrückführung. In einem ersten Schritt des Verfahrens wird aus den Messgrößen des Gaspfads, zum Beispiel der Ladelufttemperatur oder der NOx-Konzentration, die aktuelle Betriebssituation der Brennkraftmaschine festgestellt. In einem zweiten Schritt wird dann ebenfalls aus den Messgrößen über ein physikalisches Modell des Gaspfads ein Gütemaß innerhalb eines Prädiktionshorizonts berechnet. Aus dem Gütemaß und der Betriebssituation wiederum werden dann in einem dritten Schritt die Ansteuersignale für die Stellglieder des Gaspfads festgelegt. Das angegebene Verfahren bezieht sich ausschließlich auf den Gaspfad und basiert auf einem linearisierten Gaspfadmodell. Durch die Linearisierung bedingt ist ein Informationsverlust unvermeidbar.

Der Erfindung liegt daher die Aufgabe zugrunde, ein verbessertes Verfahren zur Bestimmung der AGR-Rate zu entwickeln, welches eine gesamtheitliche modellbasierte Steuerung und Regelung der Brennkraftmaschine gestattet.

Gelöst wird diese Aufgabe durch die Merkmale von Anspruch 1 und Anspruch 3. Die Ausgestaltungen sind in den jeweiligen Unteransprüchen dargestellt.

Die erste Lösung der Aufgabe besteht darin, dass die AGR-Rate mittels eines Kalman-Filters aus berechneten sowie gemessenen Größen des Gaspfads und aus berechneten sowie gemessenen Größen der Verbrennung bestimmt wird. Vorzugsweise kommt hier ein extended Kalman-Filter, ein Sigma-Punkt Kalman-Filter oder ein Spherical Simplex Unscented Kalman-Filter in Betracht. Bei der Berechnung der AGR-Rate werden Stickoxidwerte als

Emissionswerte der Verbrennung mitberücksichtigt. Anhand der aktuellen AGR-Rate wird dann eine zukünftige AGR-Rate prognostiziert, welche als maßgeblich für ein Verbrennungsmodell und ein Gaspfadmodell gesetzt wird. Beim Kalman-Filter werden zusätzlich zu den physikalischen Größen des Gaspfads auch Größen berechnet, zum Beispiel der Druck am Auslassventil der Brennkraftmaschine, welcher wiederum mitentscheidend für die Bestimmung der AGR-Rate ist. Von Vorteil ist hierbei ein Vergleich von gemessenen und berechneten Größen. So werden zum Beispiel große Abweichungen zweifelsfrei erkannt und eine Ersatzfunktion für einen Weiterbetrieb gesetzt. Zudem ist ein Abgleich von zum Beispiel gemessenen NOx-Werten mit modellberechneten NOx-Werten möglich.

Die zweite Lösung der Aufgabe besteht darin, dass in Abhängigkeit eines Sollmoments über ein Verbrennungsmodell Einspritzsystem-Sollwerte zur Ansteuerung der Einspritzsystem-Stellglieder und über ein Gaspfadmodell Gaspfad-Sollwerte zur Ansteuerung der Gaspfad-Stellglieder in Abhängigkeit der AGR-Rate berechnet werden. Ferner besteht das Verfahren darin, dass von einem Optimierer ein Gütemaß in Abhängigkeit der Einspritzsystem-Sollwerte und der Gaspfad-Sollwerte berechnet wird. Über Veränderung der Einspritzsystem-Sollwerte und Gaspfad-Sollwerte innerhalb eines Prädiktionshorizonts minimiert der Optimierer das Gütemaß und setzt das minimierte Gütemaßes als maßgeblich zur Einstellung des Betriebspunkts der Brennkraftmaschine. Bestimmt wird die AGR-Rate wie bereits zuvor beschrieben über ein entsprechendes Kalman-Filter. Bei der Berechnung der AGR-Rate werden Stickoxidwerte als Emissionswerte der Verbrennung mitberücksichtigt. Anhand der aktuellen AGR-Rate wird dann eine zukünftige AGR-Rate prognostiziert, welche als maßgeblich für ein Verbrennungsmodell und ein Gaspfadmodell gesetzt wird. Beim Kalman-Filter werden zusätzlich zu den physikalischen Größen des Gaspfads auch Größen berechnet, zum Beispiel der Druck am Auslassventil der Brennkraftmaschine, welcher wiederum mitentscheidend für die Bestimmung der AGR-Rate ist. Die zuvor beschriebenen Vorteile des Kalman-Filters sind auch hier zutreffend.

Berechnet wird das minimierte Gütemaß, indem vom Optimierer zu einem ersten Zeitpunkt ein erstes Gütemaß und zu einem zweiten Zeitpunkt ein zweites Gütemaß innerhalb des Prädiktionshorizonts prognostiziert wird. Daran anschließend wird eine Abweichung der beiden Gütemaße bestimmt. Ist die Abweichung kleiner als ein Grenzwert, so wird vom Optimierer das zweite Gütemaß als minimiertes Gütemaß gesetzt. Die Grenzwertbetrachtung ist insofern ein Abbruchkriterium, da eine weitere Minimierung zu keiner noch präziseren Anpassung führen würde. Anstelle der Grenzwertbetrachtung kann auch eine vorgebbare Anzahl von Neuberechnungen als Abbruchkriterium gesetzt werden.

Anhand des minimierten Gütemaßes werden dann vom Optimierer als Einspritzsystem-Sollwerte mittelbar ein Raildruck-Sollwert für einen unterlagerten Raildruck-Regelkreis und unmittelbar ein Spritzbeginn sowie ein Spritzende zur Ansteuerung eines Injektors vorgegeben. Ergänzend werden dann vom Optimierer mittelbar die Gaspfad-Sollwerte, zum Beispiel ein Lambda-Sollwert für einen unterlagerten Lambda-Regelkreis und ein AGR-Sollwert für einen unterlagerten AGR-Regelkreis, vorgegeben.

Sowohl das Verbrennungsmodell als auch das Gaspfadmodell bilden das Systemverhalten der Brennkraftmaschine als mathematische Gleichungen ab. Bestimmt werden diese einmalig anhand einer Referenz-Brennkraftmaschine bei einem Prüfstandslauf, dem sogenannten DoE-Prüfstandslauf (DoE: Design of Experiments) oder aus Simulationsversuchen. Da zum Beispiel unterschiedliche Emissionsziele für ein und denselben Brennkraftmaschinentyp darstellbar sind, reduziert sich der Abstimmungsaufwand in entscheidendem Maße. Eine Unterscheidung in einen stationären und einen transienten Betrieb, zum Beispiel bei einer Lastaufschaltung im Generatorbetrieb, ist nicht mehr erforderlich. Zudem wird das Sollmoment unter Einhaltung der Emissionsgrenzwerte präzise eingestellt. Die Modelle sind einzeln abstimmbar, wobei die Modelle in der Summe die Brennkraftmaschine abbilden. Die bisher erforderlichen Kennlinien und Kennfelder können somit entfallen.

In den Figuren ist ein bevorzugtes Ausführungsbeispiel dargestellt. Es zeigen:

Figur 1    ein Systemschaubild,
Figur 2    ein modellbasiertes Systemschaubild,
Figur 3    einen Programm-Ablaufplan mit einem Unterprogramm,
Figur 4    ein Kalman-Filter als Blockschaltbild,
Figur 5    ein Mehrgrößendiagramm und
Figur 6    Zeitdiagramme

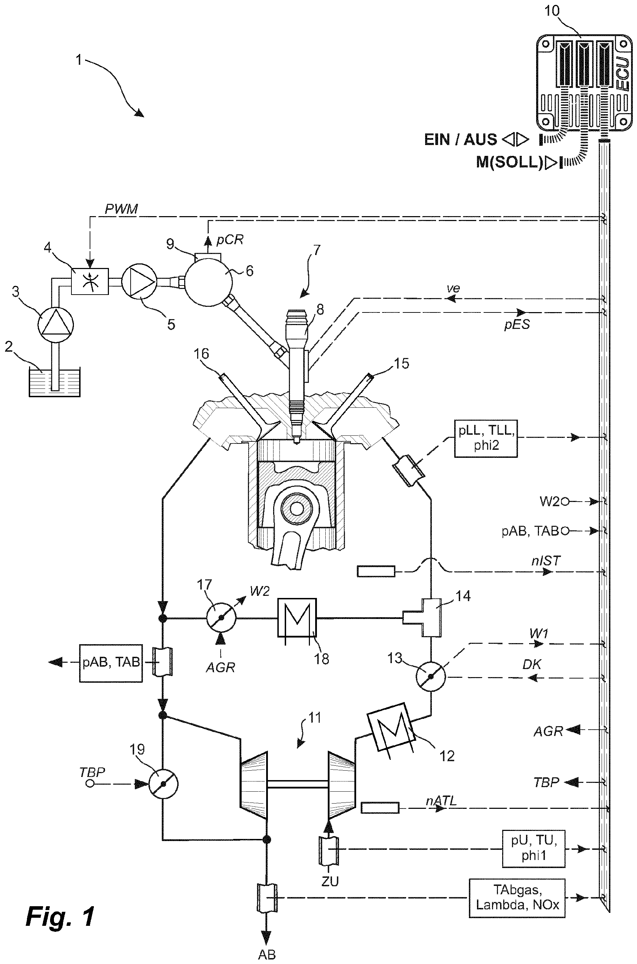

Die Figur 1 zeigt ein Systemschaubild einer elektronisch gesteuerten Brennkraftmaschine 1 mit einem Common-Railsystem. Das Common-Railsystem umfasst folgende mechanische Komponenten: eine Niederdruckpumpe 3 zur Förderung von Kraftstoff aus einem Kraftstofftank 2, eine veränderbare Saugdrossel 4 zur Beeinflussung des durchströmenden Kraftstoff-Volumenstroms, eine Hochdruckpumpe 5 zur Förderung des Kraftstoffs unter Druckerhöhung, ein Rail 6 zum Speichern des Kraftstoffs und Injektoren 7 zum Einspritzen des Kraftstoffs in die Brennräume der Brennkraftmaschine 1. Optional kann das Common-Railsystem auch mit Einzelspeichern ausgeführt sein, wobei dann zum Beispiel im Injektor 7 ein Einzelspeicher 8 als zusätzliches Puffervolumen integriert ist. Die weitere Funktionalität des Common-Railsystems wird als bekannt vorausgesetzt.

Der dargestellte Gaspfad umfasst sowohl die Luftzuführung als auch die Abgasabführung. Angeordnet sind in der Luftzuführung der Verdichter eines Abgasturboladers 11, ein Ladeluftkühler 12, eine Drosselklappe 13, eine Einmündungsstelle 14 zur Zusammenführung der Ladeluft mit dem rückgeführten Abgas und das Einlassventil 15. In der Abgasabführung angeordnet sind ein Auslassventil 16, die Turbine des Abgasturboladers 11 und ein Turbinen-Bypassventil 19. Aus der Abgasabführung zweigt ein Abgasrückführungspfad ab, in welchem ein AGR-Stellglied 17 zur Einstellung der AGR-Rate und der AGR-Kühler 18 angeordnet sind.

Die Betriebsweise der Brennkraftmaschine 1 wird durch ein elektronisches Steuergerät 10 (ECU) bestimmt. Das elektronische Steuergerät 10 beinhaltet die üblichen Bestandteile eines Mikrocomputersystems, beispielsweise einen Mikroprozessor, I/O-Bausteine, Puffer und Speicherbausteine (EEPROM, RAM). In den Speicherbausteinen sind die für den Betrieb der Brennkraftmaschine 1 relevanten Betriebsdaten als Modelle appliziert. Über diese berechnet das elektronische Steuergerät 10 aus den Eingangsgrößen die Ausgangsgrößen. Die maßgebliche Eingangsgröße ist der vom Bediener vorgegebene Leistungswunsch, zum Beispiel ein Sollmoment M(SOLL) oder ein Drehzahlwunsch oder die Stellgröße eines Drehzahlreglers. Die auf das Common-Railsystem bezogenen Eingangsgrößen des Steuergeräts 10 sind der Raildruck pCR, der mittels eines Rail-Drucksensors 9 gemessen wird und optional der Einzelspeicherdruck pES. Die auf den Luftpfad bezogenen Eingangsgrößen des elektronischen Steuergeräts 10 sind der Umgebungsluftdruck pU, die Umgebungslufttemperatur TU, eine Feuchte phi1 der Umgebungsluft, die Drehzahl nATL des Abgasturboladers 11, ein Öffnungswinkel W1 der Drosselklappe 13, die Motordrehzahl nIST, der Ladeluftdruck pLL, die Ladelufttemperatur TLL und die Feuchte phi2 der Ladeluft. Die auf den Abgaspfad bezogenen Eingangsgrößen des elektronischen Steuergeräts 10 sind ein Öffnungswinkel W2 des AGR-Stellglieds 17, der Abgasdruck pAB sowie die Abgastemperatur TAB stromauf der Turbine des Abgasturboladers 11 und die Abgastemperatur TAbgas, das Luft-Kraftstoffverhältnis Lambda sowie der NOx-Istwert stromab der Turbine des Abgasturboladers 11. Die weiteren nicht dargestellten Eingangsgrößen des elektronischen Steuergeräts 10 sind mit Bezugszeichen EIN zusammengefasst, beispielsweise die Kühlmitteltemperaturen.

In Figur 1 sind als Ausgangsgrößen des elektronischen Steuergeräts 10 dargestellt: ein Signal PWM zur Ansteuerung der Saugdrossel 4, ein Signal ve zur Ansteuerung des Injektors 7 (Spritzbeginn/ Spritzende), ein Stellsignal DK zur Ansteuerung der Drosselklappe 13, ein Stellsignal AGR zur Ansteuerung des AGR-Stellglieds 17, ein Stellsignal TBP zur Ansteuerung des Turbinen-Bypassventils 19 und eine Ausgangsgröße AUS. Die Ausgangsgröße AUS steht stellvertretend für die weiteren Stellsignale zur Steuerung und Regelung der Brennkraftmaschine 1, beispielsweise für ein Stellsignal zur Aktivierung eines zweiten Abgasturboladers bei einer Registeraufladung.

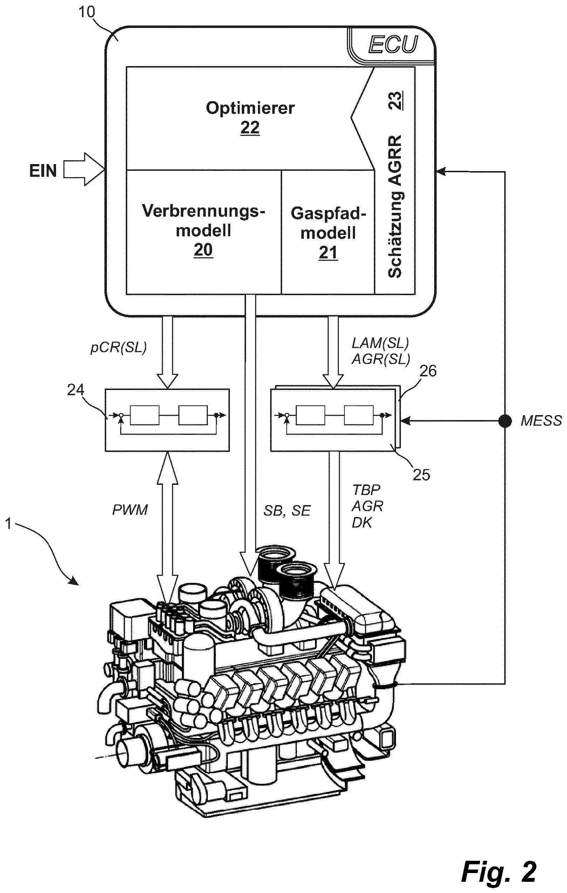

Die Figur 2 zeigt ein modellbasiertes Systemschaubild. Mit dem Bezugszeichen EIN ist hier das Soll-Moment und eine wählbare Emissionsklasse (IMO, Tier4f) gekennzeichnet. Bei dieser Darstellung sind innerhalb des elektronischen Steuergeräts 10 ein Verbrennungsmodell 20, ein Gaspfadmodell 21, ein Optimierer 22 und eine Schätzung 23 für die AGR-Rate AGRR aufgeführt. Sowohl das Verbrennungsmodell 20 als auch das Gaspfadmodell 21 bilden das Systemverhalten der Brennkraftmaschine als mathematische Gleichungen ab. Das Verbrennungsmodell 20 bildet statisch die Vorgänge bei der Verbrennung ab. Im Unterschied hierzu bildet das Gaspfadmodell 21 das dynamische Verhalten der Luftführung und der Abgasführung ab. Das Verbrennungsmodell 20 beinhaltet Einzelmodelle für die NOx- und Rußentstehung, für die Abgastemperatur, für den Abgasmassenstrom, für den Spitzendruck und das Moment. Diese Einzelmodelle wiederum hängen ab von den Randbedingungen im Zylinder, den Parametern der Einspritzung und der AGR-Rate. Die Einzelmodelle sind als Funktionen f1, f2, f3 usw., zumindest des Spritzbeginns SB, des Raildrucks pCR und der AGR-Rate AGRR abgelegt. Zum Beispiel in der folgenden allgemeinen Form:

$$NOx\text{-}Sollwert = f1(SB, pCR, AGRR...),$$

$$Ruß = f2(SB, pCR, AGRR...).$$

Die Funktion f1 beschreibt den bekannten Zusammenhang von Stickoxidemission, der Feuchte phi2 der Ladeluft, der Ladelufttemperatur, dem Spritzbeginn SB und dem Raildruck pCR. Bestimmt wird das Verbrennungsmodell 20 bei einer Referenz-Brennkraftmaschine in einem Prüfstandslauf, dem sogenannte DoE-Prüfstandslauf (DoE: Design of Experiments). Beim DoE-Prüfstandslauf werden systematisch Betriebsparameter und Stellgröße mit dem Ziel variiert, das Gesamtverhalten der Brennkraftmaschine in Abhängigkeit von motorischen Größen und Umweltrandbedingungen abzubilden.

Der Optimierer 22 wertet das Verbrennungsmodell 20 aus und zwar hinsichtlich des Sollmoments M(SOLL), der Emissionsgrenzwerte, der Umweltrandbedingungen, zum Beispiel die Feuchte phi2 der Ladeluft, und der Betriebssituation der Brennkraftmaschine. Definiert wird die Betriebssituation durch die Motordrehzahl nIST, die Ladelufttemperatur TLL, den Ladeluftdruck pLL, die AGR-Rate usw.. Die Funktion des Optimierers 22 besteht nun darin, die Einspritzsystem-Sollwerte zur Ansteuerung der Einspritzsystem-Stellglieder und die Gaspfad-Sollwerte zur Ansteuerung der Gaspfad-Stellglieder zu bewerten. Hierbei wählt der Optimierer 22 diejenige Lösung aus, bei der ein Gütemaß J minimiert wird. Berechnet wird das Gütemaß J als Integral der quadratischen Soll-Istabweichungen innerhalb des Prädiktionshorizonts. Beispielsweise in der Form:

$$(1) \qquad J = \int [w1(NOx(SOLL)\text{-}NOx(IST)]^2 + [w2(M(SOLL)\text{-}M(IST)]^2 + [w3(....)] + ...$$

Hierin bedeuten w1, w2 und w3 einen entsprechenden Gewichtungsfaktor.

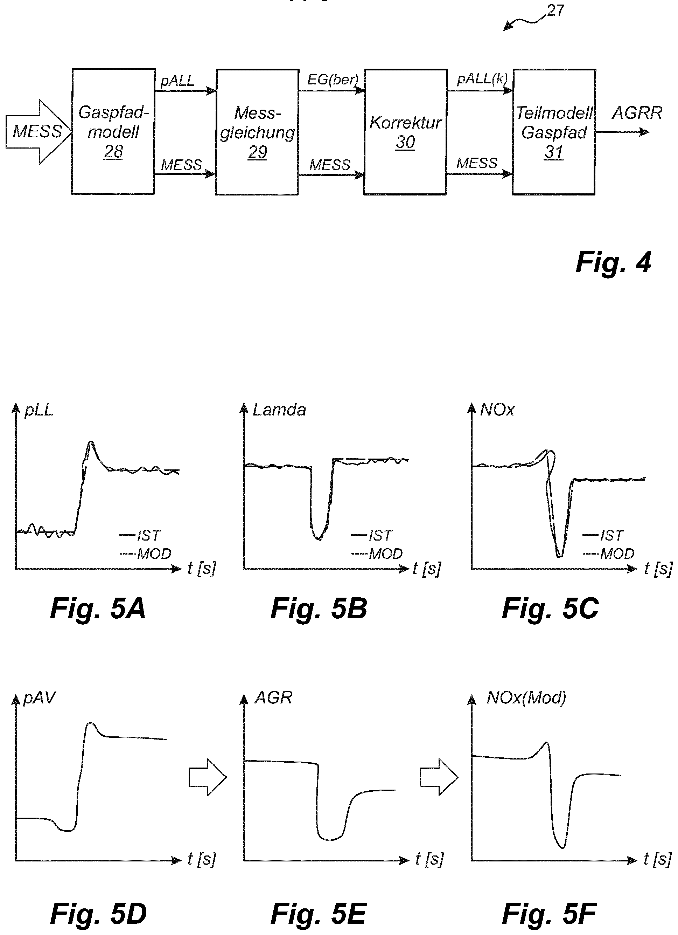

Minimiert wird das Gütemaß J, indem vom Optimierer 22 zu einem ersten Zeitpunkt ein erstes Gütemaß berechnet wird und anschließend die Einspritzsystem-Sollwerte sowie die Gaspfad-Sollwerte variiert werden. Anhand der neuen Sollwerte und den Messgrößen MESS wird dann ein zweites Gütemaß innerhalb des Prädiktionshorizonts prognostiziert. Unter den rückgeführten Messgrößen MESS sind sowohl unmittelbar gemessene physikalische Größen als auch daraus berechnete Hilfsgrößen zu verstehen. So wird aus den Messgrößen MESS über die Abschätzung 23 die AGR-Rate AGRR berechnet. Die Abschätzung 23 beinhaltet ein Kalman-Filter, welches in der Figur 4 dargestellt ist und in Verbindung mit dieser beschrieben wird. Aus der Abweichung der beiden Gütemaße zueinander legt dann der Optimierer 22 ein minimales Gütemaß fest und setzt dieses als maßgeblich für die Brennkraftmaschine. Für das in der Figur 2 dargestellte Beispiel sind dies für das Einspritzsystem der Soll-Raildruck pCR(SL), der Spritzbeginn SB und das Spritzende SE. Der Soll-Raildruck pCR(SL) ist die Führungsgröße für den unterlagerten Raildruck-Regelkreis 24. Die Stellgröße des Raildruck-Regelkreises 24 entspricht dem PWM-Signal zu Beaufschlagung der Saugdrossel. Mit dem Spritzbeginn SB und dem Spritzende SE wird der Injektor (Fig. 1: 7) unmittelbar beaufschlagt. Für den Gaspfad bestimmt der Optimierer 22 mittelbar die Gaspfad-Sollwerte. Bei dem dargestellten Beispiel sind dies ein Lamda-Sollwert LAM(SL) und ein AGR-Sollwert AGR(SL) zur Vorgabe für den unterlagerten Lambda-Regelkreis 25 und den unterlagerten AGR-Regelkreis 26. Die Stellgrößen der beiden Regelkreise 25 und 26 sind das Signal TBP zur Ansteuerung des Turbinen-Bypasses, das Signal AGR zur Ansteuerung des AGR-Stellglieds und das Signal DK zur Ansteuerung der Drosselklappe.

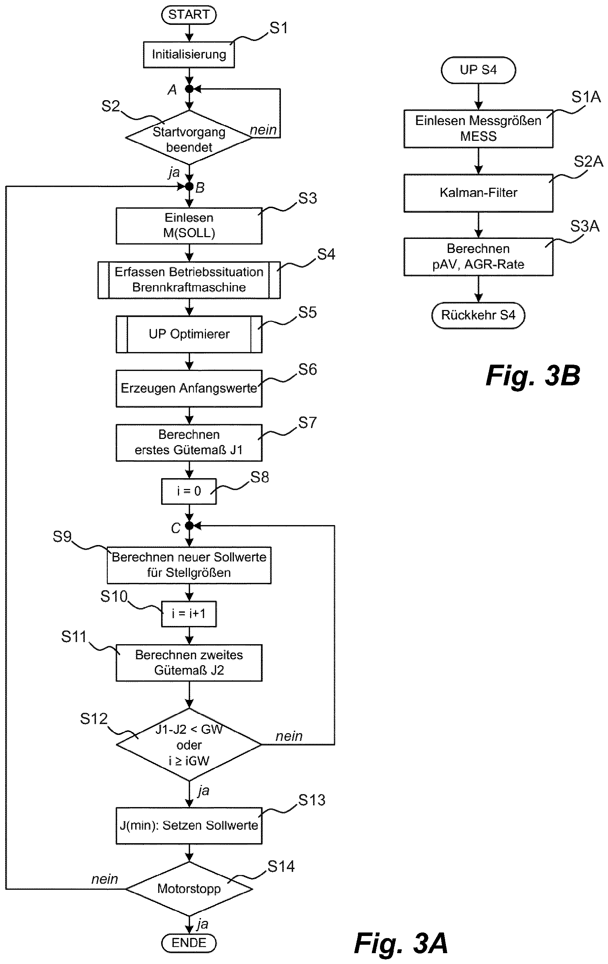

In der Figur 3 ist das Verfahren in einem Programm-Ablaufplan als Hauptprogramm (Fig. 3A) mit einem Unterprogramm (Fig. 3B) dargestellt. Nach der Initialisierung bei S1 wird bei S2 geprüft, ob der Startvorgang beendet ist. Läuft dieser noch, Abfrageergebnis S2: nein, wird zum Punkt A zurückverzweigt. Ist der Startvorgang beendet, so wird bei S3 das vom Bediener vorgebbare Sollmoment M(SOLL) eingelesen. Im Anschluss daran wird bei S4 die Betriebssituation der Brennkraftmaschine erfasst. Hierzu wird in das Unterprogramm der Figur 3B verzweigt. In diesem werden bei S1A die Messgrößen MESS eingelesen. Bei S2A werden aus den Messgrößen MESS über ein Kalman-Filter ein Druck pAV am Auslassventil der Brennkraftmaschine und als Ausgangsgröße die AGR-Rate AGRR berechnet. Die Berechnung wird in Verbindung mit der Figur 4 erläutert. Danach wird zum Hauptprogramm zu S4 zurückverzweigt.

Bei S5 wird das Unterprogramm Optimierer aufgerufen und die Anfangswerte für das Verbrennungsmodell und das Gaspfadmodell, zum Beispiel der Spritzbeginn SB, bei S6 erzeugt. Ein erstes Gütemaß J1 wird anhand der Gleichung (1) bei S7 berechnet und bei S8 eine Laufvariable i auf null gesetzt. Danach werden bei S9 die Anfangswerte verändert und als neue Sollwerte für die Stellgrößen berechnet. Bei S10 wird die Laufvariable i um eins erhöht. Anhand der neuen Sollwerte wird dann bei S11 ein zweites Gütemaß J2 innerhalb des Prädiktionshorizonts, zum Beispiel für die nächsten 8 Sekunden, prognostiziert. Bei S12 wiederum wird das zweite Gütemaß J2 vom ersten Gütemaß J1 subtrahiert und mit einem Grenzwert GW verglichen. Über die Differenzbildung der beiden Gütemaße wird der weitere Fortschritt des Gütemaßes abgeprüft. Alternativ wird anhand des Vergleichs der Laufvariablen i mit einem Grenzwert iGW geprüft, wie oft bereits eine Optimierung durchlaufen wurde. Die beiden Grenzwertbetrachtungen sind insofern ein Abbruchkriterium für eine weitere Optimierung. Ist eine weitere Optimierung möglich, Abfrageergebnis S12: nein, so wird zum Punkt C zurückverzweigt. Anderenfalls wird bei S13 vom Optimierer das zweite Gütemaß J2 als minimales Gütemaß J(min) gesetzt. Aus dem minimalen Gütemaß J(min) resultieren dann die Einspritzsystem-Sollwerte und die Gaspfad-Sollwerte zur Vorgabe für die entsprechenden Stellglieder. Im Anschluss daran wird bei S14 geprüft ob ein Motorstopp initiiert wurde. Ist dies nicht der Fall, Abfrageergebnis S14: nein, wird zum Punkt B zurückverzweigt. Anderenfalls ist der Programm-Ablaufplan beendet.

In der Figur 4 ist ein Kalman-Filter 27 in stark vereinfachter Form als Blockschaltbild dargestellt. Kalman-Filter sind in der Technik hinlänglich bekannt. Für das dargestellte Verfahren wird ein extended Kalman-Filter, ein Sigma-Punkt Kalman-Filter oder ein Spherical Simplex Unscented Kalman-Filter bevorzugt. Hierbei werden aus gemessenen Größen über ein Modell entsprechende Modellgrößen bestimmt, welche nicht unmittelbar messbar sind. Die Eingangsgröße des Blockschaltbilds sind die Messgrößen MESS. Die Ausgangsgröße entspricht der AGR-Rate AGRR. Die Messgrößen MESS entsprechen den in der Figur 1 dargestellten Messgrößen, beispielsweise dem Ladeluftdruck pLL und der Ladelufttemperatur TLL. Die Messgrößen MESS werden durch die einzelnen Funktionsblöcke 28 bis 31 durchgereicht, sodass jeder Funktionsblock Zugriff auf alle Messgrößen hat. In einem ersten Funktionsblock 28 (Gaspfadmodell) sind Differentialgleichungen abgelegt, über welche sämtliche Drücke pALL des Gaspfads abgebildet bzw. berechnet werden, zum Beispiel der nicht gemessene Druck pAV am Auslassventil. Über einen zweiten Funktionsblock 29 (Messgleichung) werden Modellwerte der Emissionsgrößen EG(ber) berechnet, zum Beispiel das Luft-Kraftstoffverhältnis Lambda und die Stickoxidemission NOx. In einem dritten Funktionsblock 30 (Korrektur) erfolgt ein stochastischer Abgleich zwischen Modell und Messung der Drücke, Ausgangsgröße pALL(k). In einem vierten Funktionsblock 31 (Teilmodell Gaspfad) wird dann anhand der korrigierten Drücke die AGR-Rate AGRR bestimmt.

In der Figur 5 ist ein Mehrgrößendiagramm dargestellt, welche mit der Figur 4 korreliert. Hierbei zeigen über der Zeit: Figur 5A den Ladeluftdruck pLL, Figur 5B das Luftkraftstoffverhältnis Lambda und Figur 5C die Stickoxidemission NOx. In den Figuren 5A bis 5C kennzeichnet die durchgezogene Linie den gemessenen Istwert und die strichlierte Linie kennzeichnet den modellbasierten Verlauf. Die Figur 5D zeigt den Verlauf des berechneten Drucks pAV am Auslassventil. Berechnet wird dieser Druck aus den Messgrößen MESS über den ersten Funktionsblock 28 (Figur 4). Über das Kalman-Filter wird dann anhand der Messgrößen MESS die AGR-Rate AGRR bestimmt (Fig. 5E). Die AGR-Rate AGRR wiederum ist ein Parameter des Verbrennungsmodells, zum Beispiel der modellbasierten Stickoxidemission NOx (Fig. 5F).

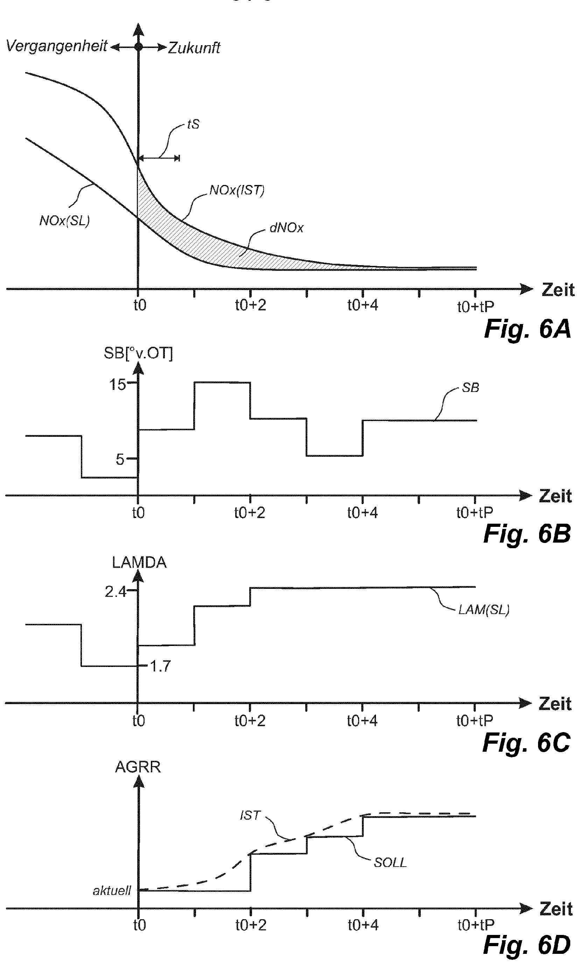

In der Figur 6 ist ein Zeitdiagramm dargestellt. Die Figur 6 umfasst die Figuren 6A bis 6D. Hierbei zeigen jeweils über der Zeit: Figur 6A den Verlauf der Stickoxid-Emission NOx, Figur 6B den Spritzbeginn SB in Grad Kurbelwellenwinkel vor dem oberen Totpunkt (OT), Figur 6C den Verlauf des Lambda-Sollwerts LAM(SL) und Figur 6D die AGR-Rate AGRR. Der Zeitbereich vor t0 entspricht der Vergangenheit. Der Prädiktionshorizont, zum Beispiel 8s, entspricht dem Zeitbereich t0 bis t0+tp. Mit ts ist eine Berechnungszeit bezeichnet, bei der ein neuer Sollwert, zum Beispiel des Spritzbeginns SB, vom elektronischen Steuergerät ausgegeben wird. Bei dem dargestellten Beispiel wird von einem konstanten Sollmoment M(SOLL) ausgegangen.

Zum Zeitpunkt t0 sind die Anfangswerte des Spritzbeginns SB=8° und der Lambda-Sollwert LAM(SL)=1.9 gesetzt. Der NOx-Sollwertverlauf NOx(SL) in der Figur 6A ist vorgegeben. Ebenfalls zum Zeitpunkt t0 wird die Abgasrückführung zur Reduktion der Stickoxidemissionen initiiert, indem das AGR-Stellglied (Fig. 1: 17) in eine geöffnete Stellung verbracht wird. Zu dieser Stellung des AGR-Stellglieds korrespondiert eine aktuelle AGR-Rate AGRR, siehe Figur 6D. Die aktuelle AGR-Rate AGRR zum Zeitpunkt t0 wiederum ist ein Parameter des Verbrennungsmodells und des Gaspfadmodells. Über das Verbrennungsmodell werden zum Beispiel die Stickoxidemission NOx, der Rußanteil und die Abgastemperatur anhand der aktuellen AGR-Rate berechnet. Die aktuelle AGR-Rate AGRR ist der Sollwert für die unterlagerten Gaspfad-Regler (Fig.2: 25, 26).

Aus diesen Anfangswerten zum Zeitpunkt t0 resultiert eine entsprechend große Soll-Istabweichung dNOx, siehe Figur 6A. Der NOx-Sollwert wird in Abhängigkeit der gemessenen Luftdrücke im Luftpfad und des Spritzbeginns SB berechnet. Über die Gleichung (1) berechnet der Optimierer ein erstes Gütemaß J1 zum Zeitpunkt t0. Anschließend berechnet der Optimierer wie sich eine Veränderung des Spritzbeginns SB und des Lambda-Sollwerts LAM(SL) in Abhängigkeit der AGR-Rate innerhalb des Prädiktionshorizonts (t0+tP) auf die Soll-Istabweichung dNOx auswirken würde. Hierzu wird in einem ersten Schritt aus den Messgrößen MESS ein zukünftiger Wert der AGR-Rate AGRR prognostiziert, beispielsweise über folgende Beziehung:

$$AGRR(neu) = f(AGRR\text{-}IST(t0), AGRR\text{-}SOLL(t0))$$

AGRR(neu): zukünftige AGR-Rate,
AGRR-IST: die berechnete AGR-Istrate zum Zeipunkt t0 und
AGRR-SOLL(t0): die AGRR-Sollrate, berechnet über das Gaspfadmodell zum Zeitpunkt t0.

Der Optimierer ermittelt zu jedem der dargestellten Zeitpunkte das zweite Gütemaß J2. Über die Subtraktion der beiden Gütemaße und die Grenzwertbetrachtung wird dann das Gütemaß minimiert, das heißt, es wird geprüft, ob eine weitere Optimierung erfolgversprechend ist. Für das dargestellte Beispiel ermittelt der Optimierer ein minimales Gütemaß für den Zeitpunkt t0+4, was sich in der Figur 6A in der Annäherung des NOx-Istwerts NOx(IST) an den NOx-Sollwerts NOx(SL) widerspiegelt. Hierzu korrespondiert der Verlauf der Figur 6D, bei dem vom Gaspfadmodell zu den Zeitpunkten t0+2 bis t0+4 jeweils ein neuer Sollwert AGR(SL) ausgegeben wurde. Gestrichelt dargestellt ist dann der sich letztendlich einstellende Ist-Verlauf der AGR-Rate.

Bezugszeichen

| | |
|---|---|
| 1 | Brennkraftmaschine |
| 2 | Kraftstofftank |
| 3 | Niederdruckpumpe |
| 4 | Saugdrossel |
| 5 | Hochdruckpumpe |
| 6 | Rail |
| 7 | Injektor |
| 8 | Einzelspeicher |
| 9 | Rail-Drucksensor |
| 10 | Elektronisches Steuergerät |
| 11 | Abgasturbolader |
| 12 | Ladeluftkühler |
| 13 | Drosselklappe |
| 14 | Einmündungsstelle |

15 Einlassventil
16 Auslassventil
17 AGR-Stellglied (AGR: Abgasrückführung)
18 AGR-Kühler
19 Turbinen-Bypassventil
20 Verbrennungsmodell
21 Gaspfadmodell
22 Optimierer
23 Schätzung AGR-Rate AGRR
24 Raildruck-Regelkreis
25 Lambda-Regelkreis
26 AGR-Regelkreis
27 Kalman-Filter
28 1. Funktionsblock (Gaspfadmodell)
29 2. Funktionsblock (Messgleichung)
30 3. Funktionsblock (Korrektur)
31 4. Funktionsblock (Teilmodell Gaspfad)

## Patentansprüche

1. Verfahren zur Steuerung und Regelung einer Brennkraftmaschine mit Abgasrückführung, bei dem eine AGR-Rate (AGRR) mittels eines Kalman-Filters (27) aus berechneten sowie gemessenen Größen des Gaspfads und aus berechneten sowie gemessenen Größen der Verbrennung bestimmt wird, **dadurch gekennzeichnet, dass** bei der Berechnung der AGR-Rate (AGRR) Stickoxidwerte (NOx) als Emissionswerte der Verbrennung mitberücksichtigt werden.

2. Verfahren nach Anspruch 1, **dadurch gekennzeichnet, dass** aus der AGR-Rate (AGRR) eine zukünftige AGR-Rate prognostiziert wird, welche als maßgeblich für ein Verbrennungsmodell (20) und ein Gaspfadmodell (21) gesetzt wird.

3. Verfahren zur modellbasierten Steuerung und Regelung einer Brennkraftmaschine (1), bei dem in Abhängigkeit eines Sollmoments (M(SOLL)) über ein Verbrennungsmodell (20) Einspritzsystem-Sollwerte zur Ansteuerung der Einspritzsystem-Stellglieder und über ein Gaspfadmodell (21) Gaspfad-Sollwerte zur Ansteuerung der Gaspfad-Stellglieder in Abhängigkeit einer AGR-Rate (AGRR) berechnet werden, bei dem von einem Optimierer (22) ein Gütemaß (J) in Abhängigkeit der Einspritzsystem-Sollwerte und der Gaspfad-Sollwerte berechnet wird, vom Optimierer (22) das Gütemaß (J) über Veränderung der Einspritzsystem-Sollwerte und Gaspfad-Sollwerte innerhalb eines Prädiktionshorizonts minimiert wird und bei dem vom Optimierer (22) anhand des minimierten Gütemaßes (J(min)) die Einspritzsystem-Sollwerte und Gaspfad-Sollwerte als maßgeblich zur Einstellung des Betriebspunkts der Brennkraftmaschine (1) gesetzt werden, **dadurch gekennzeichnet, dass** die AGR-Rate (AGRR) mittels eines Kalman-Filters (27) aus berechneten sowie gemessenen Größen des Gaspfads und berechneten sowie gemessenen Größen der Verbrennung bestimmt wird, wobei Stickoxidwerte (NOx) als Emissionswerte der Verbrennung mitberücksichtigt werden.

4. Verfahren nach Anspruch 3, **dadurch gekennzeichnet, dass** aus der AGR-Rate (AGRR) eine zukünftige AGR-Rate prognostiziert wird, welche als maßgeblich für das Verbrennungsmodell (20) und das Gaspfadmodell (21) gesetzt wird.

5. Verfahren nach Anspruch 3, **dadurch gekennzeichnet, dass** das Gütemaß (J) minimiert wird, indem vom Optimierer (22) zu einem ersten Zeitpunkt ein erstes Gütemaß (J1) berechnet wird, zu einem zweiten Zeitpunkt ein zweites Gütemaß (J2) innerhalb des Prädiktionshorizonts prognostiziert wird, eine Abweichung aus erstem (J1) und zweitem Gütemaß (J2) bestimmt wird und vom Optimierer (22) das zweite Gütemaß (J2) als minimiertes Gütemaß (J(min)) gesetzt wird, bei dem die Abweichung kleiner als ein Grenzwert (GW) wird.

6. Verfahren nach Anspruch 3, **dadurch gekennzeichnet, dass** das Gütemaß (J) minimiert wird, indem vom Optimierer (22) zu einem ersten Zeitpunkt ein erstes Gütemaß (J1) berechnet wird, zu einem zweiten Zeitpunkt ein zweites Gütemaß (J2) innerhalb des Prädiktionshorizonts prognostiziert wird und vom Optimierer (22) das zweite Gütemaß (J2) als minimiertes Gütemaß (J(min)) nach Durchlaufen einer vorgebbaren Anzahl (i) von Neuberechnungen gesetzt wird.

7. Verfahren nach Anspruch 3, **dadurch gekennzeichnet, dass** vom Optimierer (22) als Einspritzsystem-Sollwert mittelbar ein Raildruck-Sollwert (pCR(SL)) für einen unterlagerten Raildruck-Regelkreis (24) vorgegeben wird.

8. Verfahren nach Anspruch 7, **dadurch gekennzeichnet, dass** vom Optimierer (22) als Einspritzsystem-Sollwert unmittelbar ein Spritzbeginn (SB) und ein Spritzende (SE) zur Ansteuerung eines Injektors (7) vorgegeben werden.

9. Verfahren nach Anspruch 3, **dadurch gekennzeichnet, dass** vom Optimierer (22) mittelbar Gaspfad-Sollwerte für unterlagerte Gaspfad-Regelkreise (25, 26) vorgegeben werden.

**Claims**

1. Method for control and regulation of an internal combustion engine with exhaust gas recirculation, in which an EGR rate (AGRR) is determined by means of a Kalman filter (27) from calculated and measured variables of the gas path and from calculated and measured variables of the combustion, **characterised in that** nitrogen oxide values (NOx) are taken into account as emission values of the combustion when calculating the EGR rate (AGRR).

2. Method according to claim 1, **characterised in that** a future EGR rate is predicted from the EGR rate (AGRR), which is set as decisive for a combustion model (20) and a gas path model (21).

3. Method for model-based control and regulation of an internal combustion engine (1), in which injection system setpoints for actuating the injection system actuators are calculated depending on a setpoint torque (M(SOLL)) via a combustion model (20) and gas path setpoints for actuating the gas path actuators are calculated depending on an EGR rate (AGRR) via a gas path model (21), in which a quality measure (J) is calculated by an optimiser (22) depending on the injection system setpoints and the gas path setpoints, the optimiser (22) minimises the quality measure (J) by changing the injection system setpoints and gas path setpoints within a prediction horizon, and in which the optimiser (22) uses the minimised quality measure (J(min)) to set the injection system setpoints and gas path setpoints as decisive for setting the operating point of the internal combustion engine (1), **characterised in that** the EGR rate (AGRR) is determined by means of a Kalman filter (27) from calculated and measured variables of the gas path and calculated and measured variables of the combustion, wherein nitrogen oxide values (NOx) are also taken into account as emission values of the combustion.

4. Method according to claim 3, **characterised in that** a future EGR rate is predicted from the EGR rate (AGRR), which is set as decisive for the combustion model (20) and the gas path model (21).

5. Method according to claim 3, **characterised in that** the quality measure (J) is minimised by calculating a first quality measure (J1) by the optimiser (22) at a first time, predicting a second quality measure (J2) within the prediction horizon at a second time, a deviation from the first (J1) and second quality measure (J2) is determined, and the second quality measure (J2) is set by the optimiser (22) as a minimised quality measure (J(min)) at which the deviation becomes smaller than a threshold value (GW).

6. Method according to claim 3, **characterised in that** the quality measure (J) is minimised by the optimiser (22) calculating a first quality measure (J1) at a first time, predicting a second quality measure (J2) within the prediction horizon at a second time and setting the second quality measure (J2) as a minimised quality measure (J(min)) by the optimiser (22) after passing through a predeterminable number (i) of recalculations.

7. Method according to claim 3, **characterised in that** a rail pressure setpoint (pCR(SL)) for a subordinate rail pressure control loop (24) is indirectly specified by the optimiser (22) as injection system setpoint.

8. Method according to claim 7, **characterised in that** a start of injection (SB) and an end of injection (SE) for controlling an injector (7) are directly specified by the optimiser (22) as the injection system setpoint.

9. Method according to claim 3, **characterised in that** gas path setpoints for subordinate gas path control loops (25, 26) are indirectly specified by the optimiser (22).

**Revendications**

1. Procédé de commande et de régulation d'un moteur à combustion interne avec recirculation des gaz d'échappement, dans lequel un taux AGR (AGRR) est déterminé au moyen d'un filtre de Kalman (27) à partir de grandeurs calculées ainsi que mesurées du trajet de gaz et à partir de grandeurs calculées ainsi que mesurées de la combustion, **caractérisé en ce que** lors du calcul du taux AGR (AGRR), des valeurs d'oxyde d'azote (NOx) sont aussi prises en compte comme valeurs d'émission de la combustion.

2. Procédé selon la revendication 1, **caractérisé en ce que**, à partir du taux d'AGR (AGRR), un taux d'AGR futur est pronostiqué, lequel est fixé comme déterminant pour un modèle de combustion (20) et un modèle de trajet de gaz (21).

3. Procédé de commande et de régulation basées sur un modèle d'un moteur à combustion interne (1), dans lequel, en dépendance d'un couple de consigne (M(SOLL)), des valeurs de consigne du système d'injection pour la commande des organes de réglage du système d'injection sont calculées par l'intermédiaire d'un modèle de combustion (20) et des valeurs de consigne du trajet de gaz pour la commande des organes de réglage du trajet de gaz sont calculées par l'intermédiaire d'un modèle de trajet de gaz (21) en dépendance d'un taux AGR (AGRR), dans lequel une mesure de qualité (J) est calculée par un optimiseur (22) en dépendance des valeurs de consigne du système d'injection et des valeurs de consigne du trajet de gaz, l'optimiseur (22) minimise la mesure de qualité (J) en modifiant les valeurs de consigne du système d'injection et les valeurs de consigne du trajet de gaz au sein d'un horizon de prédiction et dans lequel l'optimiseur (22) fixe, à l'aide de la mesure de qualité minimisée (J(min)), les valeurs de consigne du système d'injection et les valeurs de consigne du trajet de gaz comme étant déterminantes pour le réglage du point de fonctionnement du moteur à combustion interne (1), **caractérisé en ce que** le taux AGR (AGRR) est déterminé au moyen d'un filtre de Kalman (27) à partir de grandeurs calculées et mesurées du trajet de gaz et de grandeurs calculées et mesurées de la combustion, dans laquelle des valeurs d'oxyde d'azote (NOx) sont aussi prises en compte en tant que valeurs d'émission de la combustion.

4. Procédé selon la revendication 3, **caractérisé en ce qu'**un taux AGR futur est pronostiqué à partir du taux AGR (AGRR), lequel est fixé comme déterminant pour le modèle de combustion (20) et le modèle de trajet des gaz (21).

5. Procédé selon la revendication 3, **caractérisé en ce que** la mesure de qualité (J) est minimisée en calculant une première mesure de qualité (J1) par l'optimiseur (22) à un premier moment, en prédisant une deuxième mesure de qualité (J2) au sein de l'horizon de prédiction à un deuxième moment, un écart entre la première (J1) et la deuxième mesure de qualité (J2) est déterminé et l'optimiseur (22) fixe la deuxième mesure de qualité (J2) comme mesure de qualité minimisée (J(min)), pour laquelle l'écart devient inférieur à une valeur limite (GW).

6. Procédé selon la revendication 3, **caractérisé en ce que** la mesure de qualité (J) est minimisée en calculant une première mesure de qualité (J1) par l'optimiseur (22) à un premier moment, en prévoyant une deuxième mesure de qualité (J2) au sein de l'horizon de prédiction à un deuxième moment et en fixant la deuxième mesure de qualité (J2) comme mesure de qualité minimisée (J(min)) par l'optimiseur (22) après avoir effectué un nombre (i) prédéfinissable de nouveaux calculs.

7. Procédé selon la revendication 3, **caractérisé en ce que** l'optimiseur (22) prédéfinit indirectement comme valeur de consigne du système d'injection une valeur de consigne de pression de rail (pCR(SL)) pour un circuit de régulation de pression de rail (24) subordonné.

8. Procédé selon la revendication 7, **caractérisé en ce que** l'optimiseur (22) prédéfinit directement comme valeur de consigne du système d'injection un début d'injection (SB) et une fin d'injection (SE) pour commander un injecteur (7).

9. Procédé selon la revendication 3, **caractérisé en ce que** l'optimiseur (22) prédéfinit indirectement des valeurs de consigne de trajet de gaz pour des circuits de régulation de trajet de gaz (25, 26) subordonnés.

**Fig. 1**

*Fig. 2*

Fig. 3B

Fig. 3A

27

**Fig. 4**

**Fig. 5A**

**Fig. 5B**

**Fig. 5C**

**Fig. 5D**

**Fig. 5E**

**Fig. 5F**

*Fig. 6A*

*Fig. 6B*

*Fig. 6C*

*Fig. 6D*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011006756 A1
- DE 112010003780 T5
- DE 102006004516 B3
- US 20110172897 A1
- US 20160025020 A1

**In der Beschreibung aufgeführte Nicht-Patentliteratur**

- **SAMOKHIN SERGEY.** *High-pressure recirculated exhaust gas fraction estimation and control in marine diesel engines*
- **HARDER KARSTEN.** *Nonlinear MPC with emission control for a real-world off-highway diesel engine*